# EUROPEAN PATENT APPLICATION

(11) **EP 4 509 860 A1**
(43) Date of publication of application: **19.02.2025**
(21) Application number: 23191911.9
(22) Date of filing: 17.08.2023
(51) Int. Cl.: G01S 5/00

(54) **METHOD AND SYSTEM FOR 3D CONTENT PRODUCTION**

(71) Applicant: Deutsche Telekom AG, 53113 Bonn (DE)
(72) Inventor: YUN, Harrison Hongseo, 12203 Berlin (DE); ARUNOV, Elmar, 10587 Berlin (DE)
(74) Representative: Vossius & Partner Patentanwälte Rechtsanwälte mbB

(57) **Abstract**

A system for production of an object of a three-dimensional, 3D, content comprising: A) a smartphone comprising: a camera for obtaining a plurality of images of the object of the 3D content during a movement of the smartphone, a depth sensor for obtaining depth map data of the object of the 3D content during a movement of the smartphone, and an orientation sensing unit for obtaining orientation tracking data of the smartphone during a movement of the smartphone, and B) a position tracking system for obtaining position tracking data of the smartphone during the movement of the smartphone; and C) a computing unit for texture mapping of the object of the 3D content and configured to perform UV mapping of the object based on the orientation tracking data, the position tracking data, and the images; and further configured to generate a mesh model of the object based on the position tracking data and the depth map data.

## Description

The present invention relates to a system and method for three-dimensional, 3D, content production.

The production of 3D content has important applications, e.g., in video games, movies, virtual reality, and augmented reality. In particular, the realistic modeling of human faces is an important use case, based on the proliferation of digital twins and metaverse services.

Furthermore, 3D content production technology is expected to play a key role in the growth of the metaverse market in near future. To meet this market demand, many smartphone manufacturers understand the importance of scanning technology and start deploying many advanced sensors such as high-resolution RGB cameras, IR depth sensors, LiDAR sensors, and so on.

Overall, there are two types of 3D object representation technologies, explicit and implicit model technology. Said explicit technology again consists of two different type: direct and indirect model type.

The main advantage of the explicit and direct model is that it requires less image input data and consumes less computing power for analysis, since it can retrieve depth information from directly scanned data such as LiDAR depth images.

After Apple deployed a LiDAR sensor in their iPhone flagship models, there have been many 3D scanning applications developed. However, it is reported that all 3D scanning applications which use a LiDAR sensor show quality issues, while producing 3D space objects.

Some of the known problems are caused by inaccurate position tracking of the smartphone and, especially, the LiDAR sensor, which results in a broken seam, misaligned meshes, or mismatched texture mapping.

In fact, a smartphone provides reasonable performance for its orientation tracking thanks to the sensor fusion of the Inertia measurement unit, IMU, a smartphone utilizes a Simultaneous Localization And Mapping, SLAM, algorithm to trace the position change of a smartphone.

SLAM is a computational technique that constructs or updates a map of an unknown environment while simultaneously keeping track of an agent's location. There are several ways to calculate SALM. For example, it can be calculated by multiple RGB images, or by LiDAR depth data, or laser-based distance data, but in general it is based on a sensor fusion, an aggregation, and analysis of multiple sources.

Simultaneous Localization and Mapping is a technology used in some smartphones, including iPhones, to create a map of the environment and track the device's location within that map. The iPhone's implementation of SLAM is used primarily for augmented reality, AR, applications, which overlay digital objects on the real world.

Apple's ARKit framework, which is available to developers, uses SLAM to track the position of the iPhone's camera in real time, allowing virtual objects to be placed and anchored in the real world. This is done by using the camera and other sensors on the iPhone to create 3D map of the environment, which is then used accurately track the device's position and orientation.

SLAM technology also has other potential applications beyond AR, such an indoor navigation and robotics. Also, it can play a key role to produce photorealistic 3D objects such as space environment, goods, and avatars. The precise tracking of SLAM is so much important to calculate the right position of camera and produce the right 3D models with texture mapping.

SLAM technology used in iPhones is generally accurate, but there are some limitations and potential sources of error. The potential sources of error include the quality of camera, a limited number of cameras provided in the smartphone, and the resolution of 3D depth sensors used to track the device's position.

Another potential source of error is the quality of the environment being mapped. SLAM relies on features in the environment, such as corners and edges, to accurately track the device's position. If the environment is too featureless or too cluttered, the tracking many be less accurate.

This error causes many critical defects and errors in mesh generation and texture mapping in the most of mobile 3D scanning applications. For examples, it produces mesh objects with wrong shapes and scale that are different than the physical space environment.

Furthermore, it causes wrong texture projection and mapping, wherein the high-resolution images will be projected onto the polygon meshes with wrong direction and distances.

It is possible to use external sensors to improve the precision of SLAM on an iPhone. In fact, some 3^{rd} party AR Kits and accessories for iPhones, such as the Structure Sensor and the Occipital Bridge, use additional sensors to improve the accuracy and reliability of SLAM.

For example, the "Structure Sensor" is a depth-sensing camera that attaches to the back of an iPhone or iPad and can be used to create a more detailed and accurate 3D map of the environment. This can improve the accuracy of SLAM-based AR applications, particularly in low-light or featureless environment.

Similarly, the "Occipital Bridge" is a headset that includes both a depth-sensing camera and a wide-angle camera, which can be used to improve the accuracy of SLAM-based AR applications by providing additional sensor data.

However, all examples reported in the industry are based on, so-called, inside-out tracking technology as well as computer vision technology. And, unfortunately, they still have a limitation in terms of speed of computing and improvement of accuracy. In summary, the lack of precise position tracking has been found to be the main cause of degrading the quality and increasing defects in texture mapping. Thus, it is the core idea of the present invention to provide an integrated system that provides higher accuracy on position tracking based on wireless tracking or optical tracking technology.

Embodiments of the present invention, provide a 3D content production method and system that scans 3D objects and creates 3D content in an accurate manner by integrating a smartphone with external position tracking systems.

More specifically, the embodiments of the present invention provide precise position tracking data for a 3D content production method and system that scans 3D objects and creates 3D content in an accurate manner by integrating a smartphone with external position tracking systems.

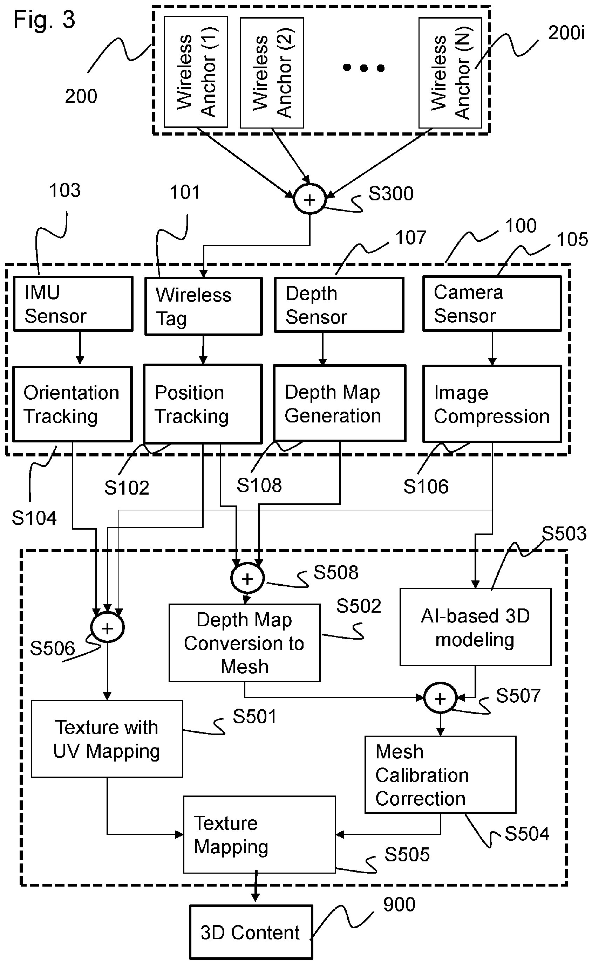

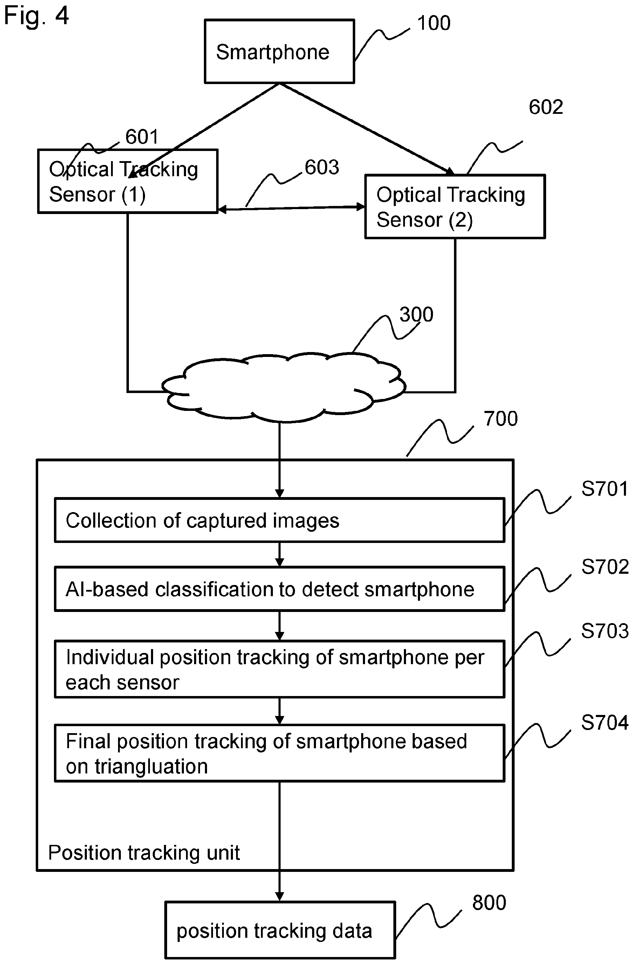

The production of 3D content based on the sensor output of a smartphone is discussed in the EP-Application EP23191870.7 by the same Inventors and filed on the same day as this application. The content of this application is incorporated by reference. In particular, the content production as disclosed in Figs. 3 b, c, and d and Figs. 4, b, c, and the corresponding parts of the description are incorporated as alternative production steps of the embodiments discussed below.

In general, an Inertia Measurement Unit, IMU, provided in a smartphone can trace an orientation movement with high accuracy. However, the SLAM technology along with an IMU and a camera sensor underperforms the position movement tracking compared to the orientation movement.

However, it is noted that the scanning of 3D space objects and small or medium size objects requires a scanning user to move the smartphone not only in orientation but also in position to capture usable depth images.

In an embodiment of the present invention, the wireless tracking uses a set of markers that are placed around the perimeter of the tracking space and one or more tags on the smartphone that is tracked. The tags on the smartphone triangulate their 3D position using the markers placed around the perimeter. The wireless tag may be integrated into the smartphone or may be attachable to the smartphone and operationally connected to the smartphone.

In an embodiment of the present invention, a wireless technology called Ultra-Wideband, UWB, is used. UWB has enabled the position tracking to reach a precision of under 100 mm. By using sensor fusion and high-speed algorithms, the tracking precision can reach 5 mm level with update speeds of 200 Hz or 5 ms latency.

In an embodiment of the present invention, optical tracking is used. Optical tracking uses cameras placed on or around the smartphone to determine the position based on computer vision algorithms. This method is based on the same principle as stereoscopic human vision. When a person looks at an object using binocular vision, he/she is able to define approximately at what distance the object is placed due to the difference in perspective between the two eyes.

In optical tracking, cameras are calibrated to determine the distance to the object and its position in space.

The embodiments of the present invention provide a system, which preferably comprises three components:
(1) a smartphone with camera and depth sensor,
(2) external tracking systems, i.e., wireless and/or optical tracking systems,
(3) edge cloud environment for computing.

It is noted that, the terminology differs between different fields of technology. The terms markers and receivers are used in VR industry. The terms anchors and tags are used in UWB technology. However, for the purpose of this description the same or similar functions are assumed for both terms, and the terms are used synonymously.

While the VR industry terms refers to a higher and more abstract layer, the UWB terms refer to one specific implementation method. The terms are used accordingly for improved interlegibility but not for limitation of the embodiment.

It is thus an object of the present invention to provide an improved system and method for three-dimensional, 3D, content production. The invention is set out in the appended set of claims. Any references in the following description to embodiments, objects, aspects and/or examples which are not covered by the appended claims are considered as not being part of the present invention.

According to an aspect of the present invention, there is provided a system for production of an object of a three dimensional, 3D, content comprising:
A) a smartphone comprising:
   a camera for obtaining a plurality of images of the object of the 3D content during a movement of the smartphone,
   a depth sensor for obtaining depth map data of the object of the 3D content during a movement of the smartphone, and
   an orientation sensing unit for obtaining orientation tracking data of the smartphone during a movement of the smartphone, and
B) a position tracking system for obtaining position tracking data of the smartphone during the movement of the smartphone; and
C) a computing unit for texture mapping of the object of the 3D content and configured to perform UV mapping of the object based on the orientation tracking data, the position tracking data, and the images; and further configured to generate a mesh model of the object based on the position tracking data and the depth map data.

In an embodiment of the present invention, the position tracking system comprises a plurality of wireless markers and at least one wireless tag, wherein the at least one wireless tag is comprised in the smartphone, or attached to and operatively coupled to the smartphone.

In an embodiment of the present invention, the position tracking data is determined based on a time signal transmitted from the wireless markers to the at least one wireless tag.

In an embodiment of the present invention, a local clock of each of the wireless markers and the wireless tags is synchronized to a global clock, preferably a local clock of each of the wireless markers is synchronized to a clock of one wireless tag; and wherein the time signal is periodically transmitted from the wireless markers or is transmitted from the wireless markers in response to a request from the at least one wireless tag.

In an embodiment of the present invention, the position tracking data is determined based on distance measurements between the at least one wireless tag and the respective wireless markers; and wherein the distance measurements are based on a Time of Flight, ToF, and/or a Time difference of Arrival, TDoA, measurement of the time signals transmitted from the wireless markers.

In an embodiment of the present invention, the position tracking system comprises a plurality of optical tracking markers configured to obtain a plurality of images of the smartphone during the movement of the smartphone, wherein the position tracking system further comprises a position tracking unit configured to track the position of the smartphone based on the images obtained by the optical tracking markers.

In an embodiment of the present invention, the computing unit comprises an artificial intelligence for determining a second mesh model of the object based on the plurality of images; wherein the computing unit is configured to correct and/or calibrate the mesh model based on the second mesh model.

In an embodiment of the present invention, the computing unit is configured to perform texture mapping based on the UV mapping and the mesh model or the corrected and/or calibrated mesh model.

According to an aspect of the present invention, there is provided a method for production of an object of a three dimensional, 3D, content, the method comprising the steps of performing a movement of a smartphone about the object of the 3D content, wherein the smartphone comprises a camera for obtaining a plurality of images of the object of the 3D content during the movement of the smartphone, a depth sensor for obtaining depth map data of the object of the 3D content during a movement of the smartphone, and an orientation sensing unit for obtaining orientation tracking data of the smartphone during a movement of the smartphone; obtaining a position tracking data of the smartphone during the movement of the smartphone; and texture mapping of the object of the 3D content by performing UV mapping of the object based on the orientation tracking data, the position tracking data, and the images, and further by generating a mesh model of the object based on the position tracking data and the depth map data.

According to an aspect of the present invention, there is provided a smartphone for use in a system according to any one of the above system embodiments or in a method according to the above method.

According to an aspect of the present invention, there is provided a wireless marker for use in a system according to any one of the above system embodiments or in a method according to the above method.

It is a core aspect of the present invention that external sensors are used to improve the accuracy of SLAM calculation for the target smartphone. Several external sensors are directly attached to the space environment.

Embodiments of the present invention relate to two different models: a) Inside-out tracking with external wireless markers, also referred to as anchors, and b) Outside-in tracking with external optical sensors.

In case of inside-out tracking with external wireless marker embodiments, external wireless sensors are attached to the space environment and transmit short pulses of radio waves that are spread a wide frequency band. The pulses are then detected by a wireless receiver, also referred to as tag, that will be attached to the target smartphone and/or built-in a smartphone, which can use the time-of-flight of the signal to calculate the distance between the marker and the receiver. By using multiple markers, it is possible to triangulate the position of the target smartphone in three-dimensional space with high accuracy.

The applicants have realized that the conventional use of UWB in which the position tracking data is calculated in the anchors results in a complex system with complex and thus expensive technology in the anchors.

Thus, it is a core aspect that the position tracking is calculated in the smartphone and/or a cloud computing environment connected therewith. To this end, the anchors/markers are only required to provide a precise time information.

Thus, it is a further core aspect that the anchors/markers a synchronized to a clock of the smartphone in order to allow for precise calculations at the smartphone.

In case of outside-in tracking with external optical sensors embodiments, external optical sensors are attached to the space environment and capture the RBG data for the target smartphone and then calculate the SLAM based on a computer vision technology to track the position of the target smartphone. This allows for more accurate and precise tracking, as the external optical sensors can provide a wider range of view and more data points to work with.

### Brief description of the drawings

Embodiments of the present invention will now be described by way of example only and with reference to the following accompanying drawings, in which
- Fig. 1a: shows a synchronization between wireless markers and a wireless tag according of a system according to a first embodiment of the present invention;
- Fig. 1b: shows a position tracking of a wireless tag in a system according to the first embodiment of the present invention based on position tracking of a wireless tag;
- Fig. 2: shows a block diagram of the system according to the first embodiment of the present invention based on inside-out tracking;
- Fig. 3: shows a data flow diagram of the system according to the first embodiment of the present invention based on inside-out tracking;
- Fig. 4: shows a position tracking of a system according to a second embodiment of the present invention based on outside-in tracking;
- Fig. 5: shows a block diagram of the system according to a second embodiment of the present invention based on outside-in tracking;
- Fig. 6: shows a data flow diagram of the system according to a second embodiment of the present invention based on outside-in tracking;
- Fig. 7a: shows a timing diagram of the synchronization according to an embodiment of the present invention; and
- Fig. 7b: shows a data flow diagram of the of the synchronization according to an embodiment of the present invention.

### Detailed description

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like members throughout the description.

In this description the term smartphone also encompasses all similar mobile computing devices. A smartphone comprises at least: one or more network communication interfaces, a display device, processing means, memory means, and different types of sensors. Wherein the sensors comprise one or more of: a RGB camera, a depth sensor, a IMU sensor, and a geolocation sensor.

In the first embodiment a smartphone comprises a wireless receiver. That is, the smartphone preferably comprises a wireless tag, more preferably a UWB tag. Alternatively, the wireless tag may be attached and operatively communicated to the smartphone. The position tracking is performed based on a Time of Flight, ToF, and/or a Time difference of Arrival, TDoA, measurement of the precise location of the wireless receiver, which corresponds to the location of the smartphone, in relation to a plurality of wireless anchors.

In order to perform the location calculation with a sufficient precision for 3D content production, it is preferred that at least 3 UWB anchors are placed per 5m² area.

In this embodiment, the data required for the calculation of the position tracking data is measured at the smartphone; thus, also the calculation of the position tracking is preferably performed in the smartphone. Additionally or alternatively, the calculation or parts thereof may be performed in a cloud computing environment connected to the smartphone.

In order to allow for precise location calculations a global clock synchronization is required before starting measuring the ToF and TDoA. Then, ToF and TDoA are well known methods to measure the precise location of a UWB tag, i.e., the smartphone in the present invention.

In an example, for synchronization at least two UWB modules, i.e., tags or anchors, generate a clock data; then the at least two UWB modules share the clock data generated from a respective other UWB module; and then the at least two UWB modules compare the time difference and adjust a global clock accordingly.

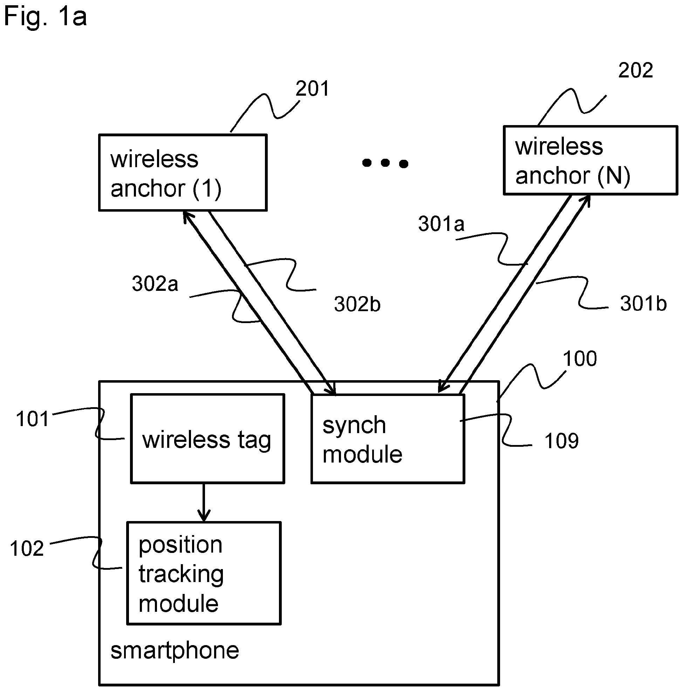

Fig. 1a shows a synchronization between two wireless markers and a wireless tag according of a system according to a first embodiment of the present invention. The system according to the present invention comprises a plurality of wireless markers 201 and 202 and a smartphone 100. The smartphone comprises a wireless tag 101, a position tracking module 102 and a synchronization module 109.

The wireless markers 201 and 202 are in communication with the synchronization module 109. In an embodiment of the present invention, the synchronization module 109 is integrated in the wireless tag 101 or used communications means of the wireless tag 101 to communicate with the wireless markers.

The synchronization module 109 is configured to send synchronization requests 301a and 302a to the respective wireless markers. The synchronization module 109 is configured to receive synchronization responses 301b and 302b from the respective wireless markers.

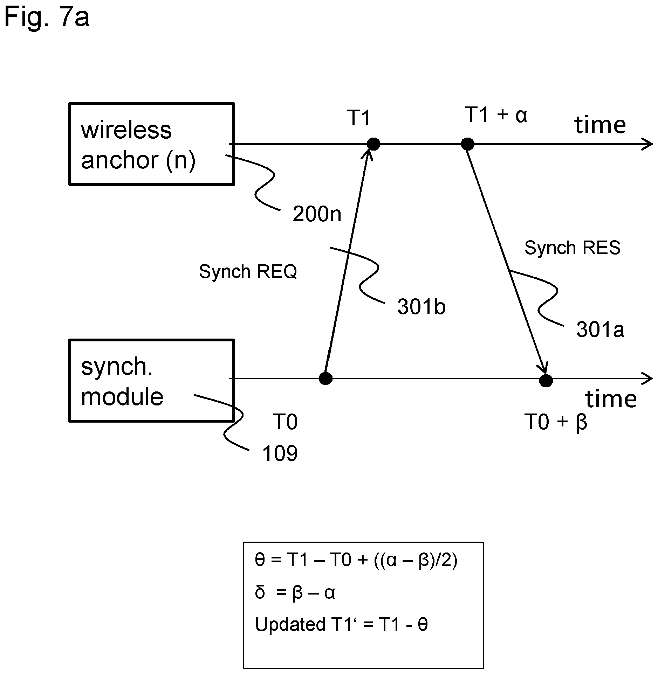

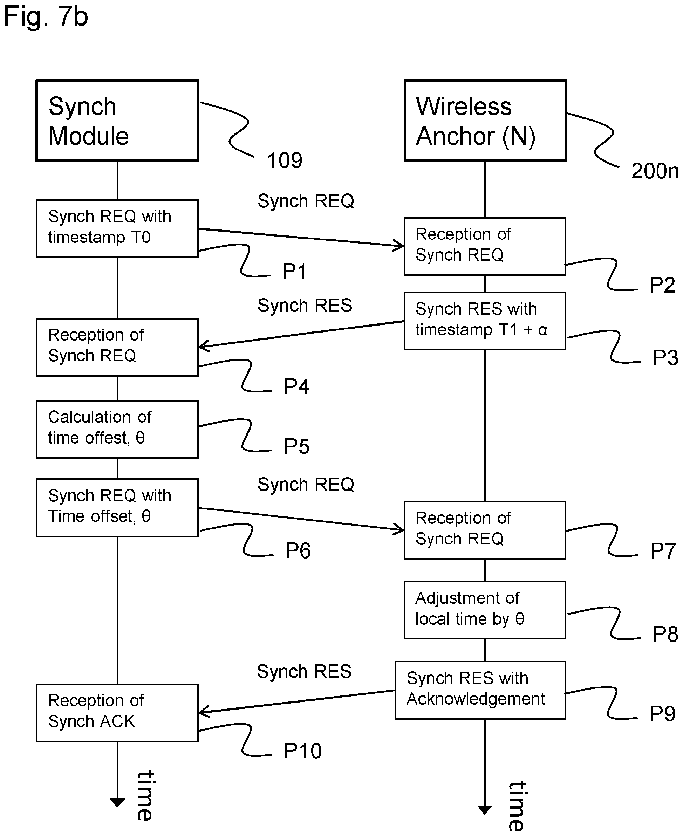

Fig. 7a shows a timing diagram of the synchronization according to an embodiment of the present invention; and Fig. 7b shows a data flow diagram of the of the synchronization according to an embodiment of the present invention.

In detail, in Figs 7a:
T0 = timestamp at synch. module when transmitting a synch REQ;
T1 = timestamp at wireless marker when receiving a synch REQ;
α = processing time at wireless marker;
β = network round-trip latency time + wireless marker processing time;
θ = time offset, a time difference between synch. module and wireless marker; and
δ = network latency time.

It is noted that the network latency time is assumed to be equal in Synch REQ and Synch RES transmissions.

According to an aspect of the present invention, the synchronization of a wireless marker is performed analogous to the NTP protocol. In detail, to synchronize a wireless marker 200n the synchronization module 109 send a sync request message, Synch REQ, 301b at time T0. Said message is received at a local time T1 at the wireless sensor. After processing the message, a response message, Sych RES, 301a is send from the wireless marker 202n to the synchronization module 109.

The flow diagram of Fig. 7b further illustrates the synchronization. The synchronization request message is sent in step P1 and preferably comprises the timestamp T0. The synchronization request message is received at timestamp T1 at the wireless marker in step P2. The synchronization request is processed, and a response message is sent at time timestamp T1 + α in step P3, the response message preferably comprises the timestamp T1+ α. In step P4, the response message is received at the synchronization module 109.

In step P5, at the synchronization module the time offset θ is calculated based on θ = T1 - T0 + ((α - β)/2) and δ = β - α. Then in step P6 a second synchronization message is send from the synchronization module 109 to the wireless marker. The second synchronization message preferably comprises the time offset θ.

In step P7 the second synchronization message is received at the wireless marker and the local time of the wireless marker is adjusted based on the time offset θ in step P8. That is, the new time T1' is T1' = T1 - θ.

In step P9, an acknowledgement message is send from the wireless marker 200n to the synchronization module 109, which is received in step P10 at the synchronization module 109.

It is noted that alternatively other methods may be used to synchronize the local times at the plurality of wireless markers to the time of the wireless tag at the smartphone.

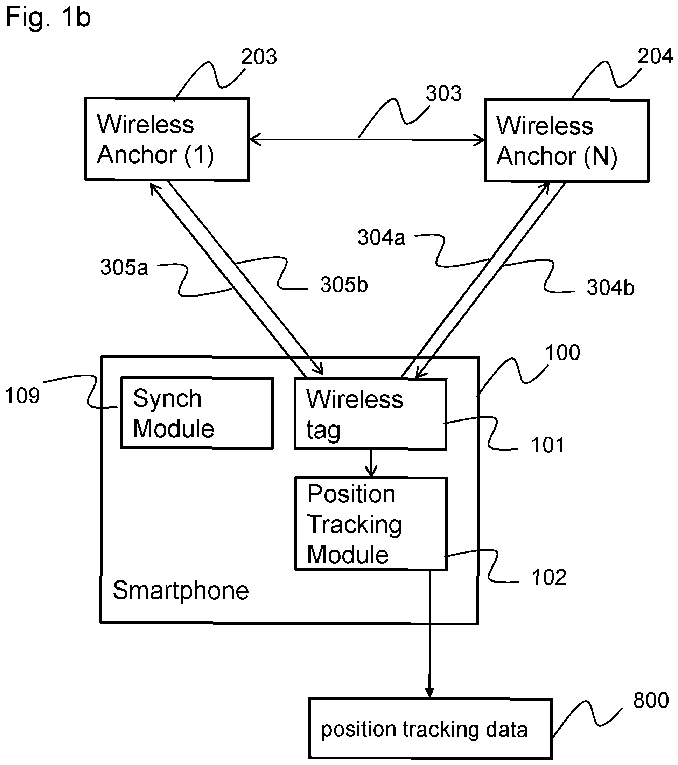

Fig. 1b shows a position tracking of a wireless tag in a system according to the first embodiment of the present invention based on position tracking of a wireless tag by triangulation.

The wireless markers 201 and 202 are placed on fixed positions in an area of the space surrounding the object to be scanned, also referred to as target object.

According to an embodiment of the invention, said markers are used to trace the precise position of the smartphone in order to obtain the right UV coordinates for 3D content production. The markers may be be attached on the wall in any space on a living environment, e.g., living room, classroom, office space or professional studios, etc.

The size of the target object can cover a wide range from a small object, e.g., chair, etc., to an entire space, e.g., living room, convention hall, etc. The more marker devices are used the more accurate the measurement is. In general, it would be recommended to install 3 to 5 markers to cover a typical living room.

However, due to the range limit for UWB, the maximum distance between the marker and tag would be between 1 to 25 meters.

According to an embodiment of the invention a plurality of wireless markers 201, 202, 200n is provided in an area surrounding the object. The clocks of the wireless markers have been synchronized, and preferably also distances between the markers have been determined in a preparation phase. A wireless tag 101 is provided at a smartphone 100 or comprised in a smartphone 100.

For scanning the object said smartphone 100 is moved for scanning the object with SLAM as discussed above. To process the image data acquired during the movement with SLAM a precise position tracking of the smartphone 100 is required.

The position tracking is performed in a position tracking module 102 based on the signals received from the wireless markers at the wireless tag, preferably by a ToF or TDoA or measurement. From the measured distance to the wireless markers the position of the smartphone is calculated based on triangulation.

In a preferred embodiment, UWB anchors transmit a series of short duration pulses to the UWB tag. Said pulses are spread across a very wide frequency band, resulting in a very low power spectral density. The UWB tag then uses the time difference of arrival and/or time of flight of these pulses to calculate its distance from the anchors and determine its position.

In detail, the smartphone 100 comprises a wireless tag 101 and a position tracking module 102. The plurality of wireless markers is represented by a first marker 203 and a second marker 204. Optionally, the distance 303 between the first marker 203 and the second marker 204 has been measured or is predetermined upon setup of the system.

In an embodiment of the present invention, for position tracking the wireless tag is configured to receive the clock signal 305 from the first marker 203 and the clock signal 304 from the second marker 204. The position tracking module 102 is configured to determine the position of the smartphone based on the distance 303 between the markers and the current respective distance between the tag and the marker. The current respective distance is calculated via a ToF or TDoA measurement based on the received clock signals.

In an embodiment of the present invention, the UWB anchors UWB anchors periodically transmit a series of short duration pulses 304b 305b to the UWB tag. Since the local clocks have been synchronized. The distance to the UWB anchor can be calculated precisely via a ToF or TDoA.

In an embodiment of the present invention, the UWB anchors UWB anchors transmit in response to a request message 304a 305a a series of short duration pulses 304b 305b to the UWB tag. Since the local clocks have been synchronized. The distance to the UWB anchor can be calculated precisely via a ToF or TDoA.

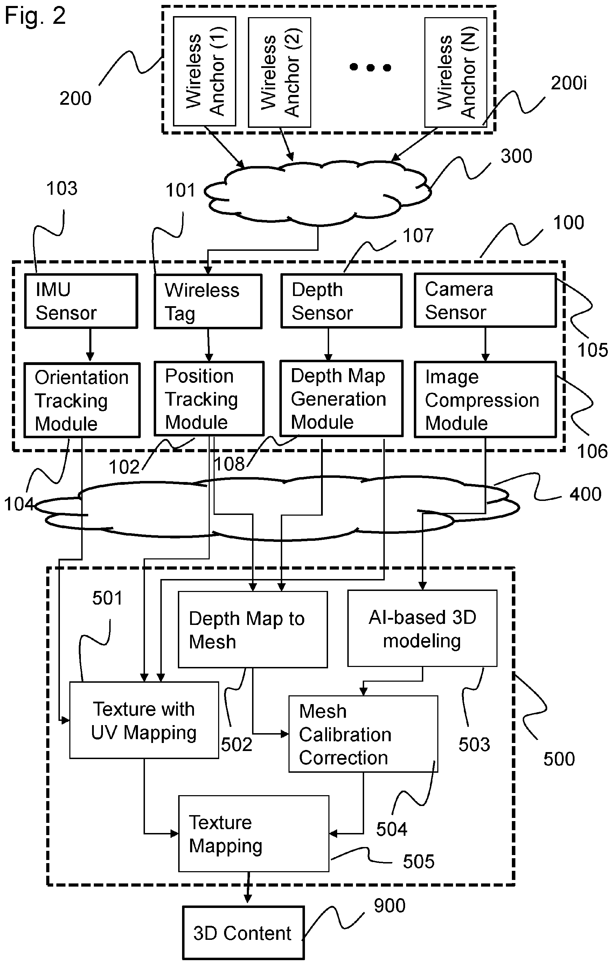

Fig. 2 shows a block diagram of the system according to the first embodiment of the present invention based on inside-out tracking. As detailed above, the system comprises a plurality 200 of wireless markers 200i.

The system further comprises a smartphone 100. The smartphone comprises a inertial measurement sensor 103 operably connected to an orientation tracking module 104 for measuring the orientation of the smartphone; a wireless tag 101 operably connected to a position tracking module 102 for receiving the signals from the wireless markers 200 and for position tracking of the smartphone; a depth sensor 107 operably connected to a depth generation module 108 for generating a depth map of the object; and a camera sensor 105 operably connected to an image compression module 106 for obtaining and compressing images of the object.

The signals from the wireless markers may be received directly by the wireless tag 101. Alternatively, depending on the technical implementation the signals may be received via cloud network 300. The cloud network may be a mobile or wireless network component such 5G, WiFi, UWB, BLE, etc. The cloud network may be connected to the other system components such as the smartphone 100 and/or a processing unit 500.

The position tracking is performed as discussed above with respect to Fig. 1b.

The system further comprises a processing unit 500, preferably a network-based processing unit. The processing unit may also be implemented in the smartphone 100 (not shown).

The processing unit 500 is configured to receive the orientation tracking data, the position tracking data, the depth data, and the image data from the scanning smartphone 100. The processing unit is configured to produce a 3D content based on the received data.

As indicated above, the referenced and incorporated EP application "System and method for photorealistic 3d content production" discloses an improved method for photorealistic 3d content production. The same steps as disclosed therein may be employed to process the orientation tracking data, the position tracking data, the depth data, and the image data from the scanning smartphone 100.

That is, the method, or parts thereof, as disclosed in said referenced and incorporated EP application may be used to produce 3d content based on the acquired data discussed in the present description and thus may form embodiments of the present invention.

The above data may be received directly from the smartphone, or, as illustrated in Fig. 2, may be received via a cloud network 400. The processing unit 500 may be comprised in the cloud network 400. The cloud network 400 may be the same network as the cloud network 300.

The processing unit 500 comprises a UV mapping module 501 configured to receive the position tracking data, the orientation tracking data, and the depth data. The processing unit 500 further comprises a depth map to mesh module 502 configured to calculate receive the depth data and the position tracking data. The processing unit 500 further comprises an AI-based 3D modelling unit configured to receive the image data.

The processing unit 500 further comprises a mesh calibration and/or correction unit 504 configured to receive the mesh output from the depth map unit 502 and the AI-based modeling unit 503. The calibration and/or correction unit is configured to correct the AI-based mesh model based on the depth map model. The calibration and/or correction is discussed in detail in the above referenced EP application EP23191870.7.

The processing unit 500 further comprises a texture mapping module 505 configured to receive the corrected model from the calibration and/or correction unit 504 and the UV-mapping unit 501. The texture mapping module 505 outputs the produced 3D content 900.

Fig. 3 shows a data flow diagram of the system according to the first embodiment of the present invention based on inside-out tracking. In general, the embodiment of Fig. 3 corresponds to the embodiment of Fig. 2, however, the data aggregation and processing is described in more detail.

In step S300, the data of the plurality of wireless markers 200 is aggerated before it is processed in the wireless tag. The aggregation may be performed in the wireless tag 101 or in a cloud network 300 (not shown).

In step S104, the IMU output is processed into an orientation tracking data.

In step S102, the position tracking data is calculated, preferably as discussed above with reference to Fig. 1b.

In step S108, the depth data, preferably a 3D depth map, is calculated based on the output data of the depth sensor 107.

In step S106, image compression is performed on a plurality of images from the camera sensor 104 to calculate the image data.

The skilled person has different methods at hand to implement each of steps S104, S108, and S106. All processes are necessary to produce accurate and photorealistic 3D objects. However, based on extensive testing, it has been found that a combination of different methods may influence the quality of the 3D output, thus the respective implementation should be selected to produce the best output.

In step S506, three data sets are aggregated: the position of smartphone from the position tracking S102, orientation of smartphone from the orientation tracking S104, and image data from S106; the data is then transferred to the UV mapping unit in order to perform UV mapping S501 on the image data.

In step S508, two data sets are aggerated, the position of smartphone from S102 and the depth map data from S108; and then transferred into the "Depth Map Conversion to Mesh" component in order to generate a mesh object S502.

In step S503, and artificial intelligence, AI, is employed to generate a 3D model, preferably a mesh model based on the image data.

In step S507, two data sets are aggerated, a mesh object that is produced based on an AI network in S503, and a mesh object that is directly produced by 3D depth sensor data in step S502, and then transfer them into the Mesh Calibration Correction unit to generate a corrected mesh object in S504.

In step S505, texture mapping is performed with the UV-mapping from S501 and the corrected mesh object from S504. The texture mapping step S505 outputs 3D content 900.

Fig. 4 shows a position tracking of a system according to a second embodiment of the present invention based on outside-in tracking. The second embodiment differs from the first embodiment in that the position tracking is different. In the second embodiment optical tracking of the smartphone is used.

To this end, a plurality of optical tracking sensors 601, 602 is placed in a specific area around the object to be scanned. The system of the second embodiment is configured to take multiple images aiming the smartphone, i.e., a tracking target. Subsequently computing resources, such as a cloud computing resource and/or local smartphone resources calculate the precise location of the smartphone, i.e., a tracking target, based on a photogrammetry algorithm.

A typical optical tracking sensor comprises multiple RGB camera sensors, at least one processor to compress the image data, and a network interface to upload the image data to the cloud 300. There is no industrial standard for optical tracking sensors, though, a couple of studios deploy it to produce a photorealistic 3D avatar or objects.

As an example, Volucap is a startup company that provides a studio service to produce a 3D avatar. Recently, AI-network-based 3D modeling technology has been combined with photogrammetry and appears to be able to enhance the overall performance of such avatar production.

Returning to Fig.4, in detail, the images captured by the optical tracing sensors 601 and 602 are collected in a position tracking unit 700. The distance 603 between the optical tracking sensors is measured in a setup step and is thus predefined.

The position tracking unit 700 may be a stand-alone unit or may be a network-based unit. The captured images may be transmitted to the position tracking unit directly or via a network 300, preferably a cloud network, such as a 5G edge cloud. The position tracking unit 700 may be comprised in said cloud network.

Additionally or alternatively, the position tracking unit may be comprised or partly comprised in a local computing environment, preferably in the tracked smartphone.

The position tracking unit 700 is configured to collect, S701, the captured images. The position tracking unit 700 is further configured to detect, S702, the smartphone 100 in the images, preferably by employing an AI-based classification method. The position tracking unit 700 is configured to perform individual position tracking, S703, per each sensor. The position tracking unit is configured to perform final position tracking, S704, of the smartphone based on triangulation. The position tracking unit is configured to output position tracking data 800 of the smartphone.

In detail, in a preferred embodiment, step S703 measures individual distances between a smartphone 100 and each optical sensor 601 and 602, respectively. However, in general, a distance measured from the only one optical sensor would be also analyzed. The distance measurement it will not be as accurate due to the limited geometry data. Therefore, in a preferred embodiment, to improve the tracking accuracy, triangulation analysis is performed based on an accumulation of multiple individual distance data.

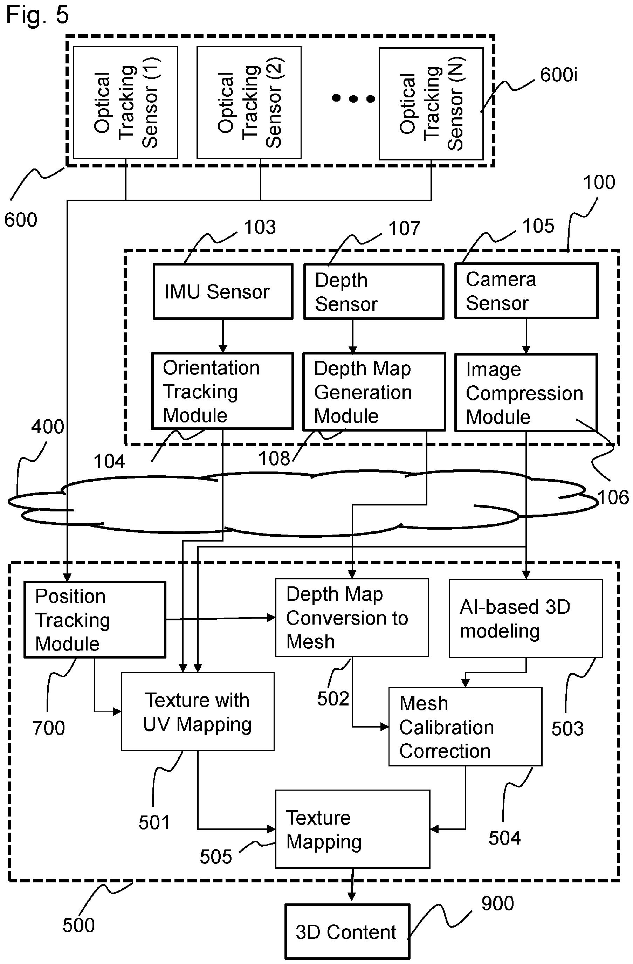

Fig. 5 shows a block diagram of the system according to a second embodiment of the present invention based on outside-in tracking. As discussed above the position tracking in the second embodiment differs from the first embodiment. However, the remaining aspects of the system are the same as in Fig. 2.

In detail, the position tracing module 700 is comprised in the processing unit 500. The data from the optical sensors 600 is collected via a network 400. The network 400 may be the same as the network 300 and/or may be the same network connecting the smartphone 100 to the processing unit 500. The processing unit 500 may be comprised in the network 400.

According to the outside-in tracking method of the current embodiment to trace the location of the target, i.e., the smartphone 100, the optical tracking sensors are configured to take a picture of said smartphone 100 as well as the environment of said smartphone. It is an advantage that such a photogrammetry-based method doesn't require any computational interaction with the tacking target.

In a preferred embodiment, the system is configured such that the smartphone 100 is a local device and the processing unit 500 is a cloud infrastructure equipped with powerful GPU computing resources. However, in the future, 100 and 500 can be merged into a local device, if the computing power of this local device grows enough not only to trace the position but also to support a whole end-to-end pipeline to generate 3D modeling.

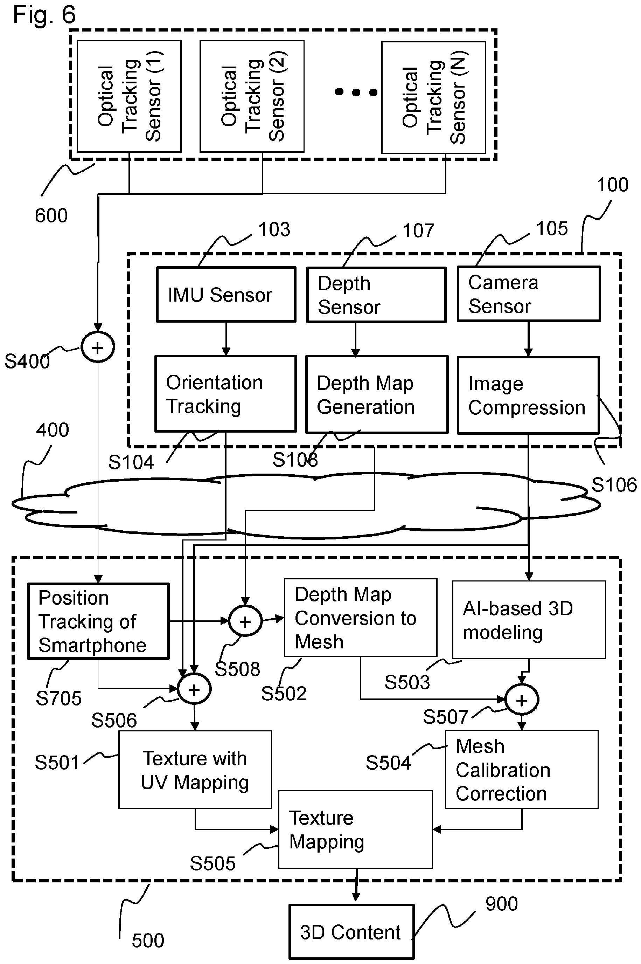

Fig. 6 shows a data flow diagram of the system according to a second embodiment of the present invention based on outside-in tracking. The data flow essentially corresponds to the data flow in Fig. 3, however, the position tracking data flow is different.

In step S400 the multiple optical image data from the multiple optical tracking sensors in aggerated and provided to the position tracking in step S705. The position tracking in S705 essentially corresponds to the position tracking discussed above with reference to Fig. 4.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A system for production of an object of a three-dimensional, 3D, content comprising:
A) a smartphone comprising:
a camera for obtaining a plurality of images of the object of the 3D content during a movement of the smartphone,
a depth sensor for obtaining depth map data of the object of the 3D content during a movement of the smartphone, and
an orientation sensing unit for obtaining orientation tracking data of the smartphone during a movement of the smartphone, and
B) a position tracking system for obtaining position tracking data of the smartphone during the movement of the smartphone; and
C) a computing unit for texture mapping of the object of the 3D content and configured to perform UV mapping of the object based on the orientation tracking data, the position tracking data, and the images; and further configured to generate a mesh model of the object based on the position tracking data and the depth map data.

2. System according to claim 1,
wherein the position tracking system comprises a plurality of wireless markers and at least one wireless tag,
wherein the at least one wireless tag is comprised in the smartphone, or attached to and operatively coupled to the smartphone.

3. System according to claim 2, wherein the position tracking data is determined based on a time signal transmitted from the wireless markers to the at least one wireless tag.

4. System according to claim 3,
wherein a local clock of each of the wireless markers and the wireless tags is synchronized to a global clock, preferably a local clock of each of the wireless markers is synchronized to a clock of one wireless tag; and
wherein the time signal is periodically transmitted from the wireless markers or is transmitted from the wireless markers in response to a request from the at least one wireless tag.

5. System according to claim 4,
wherein the position tracking data is determined based on distance measurements between the at least one wireless tag and the respective wireless markers; and
wherein the distance measurements are based on a Time of Flight, ToF, and/or a Time difference of Arrival, TDoA, measurement of the time signals transmitted from the wireless markers.

6. System according to claim 1,
wherein the position tracking system comprises a plurality of optical tracking markers configured to obtain a plurality of images of the smartphone during the movement of the smartphone,
wherein the position tracking system further comprises a position tracking unit configured to track the position of the smartphone based on the images obtained by the optical tracking markers.

7. System according to any one of claims 1 to 6,
wherein the computing unit comprises an artificial intelligence for determining a second mesh model of the object based on the plurality of images;
wherein the computing unit is configured to correct and/or calibrate the mesh model based on the second mesh model.

8. System according to claim 7, wherein the computing unit is configured to perform texture mapping based on the UV mapping and the mesh model or the corrected and/or calibrated mesh model.

9. A method for production of an object of a three-dimensional, 3D, content, the method comprising the steps of
performing a movement of a smartphone about the object of the 3D content, wherein the smartphone comprises a camera for obtaining a plurality of images of the object of the 3D content during the movement of the smartphone, a depth sensor for obtaining depth map data of the object of the 3D content during a movement of the smartphone, and an orientation sensing unit for obtaining orientation tracking data of the smartphone during a movement of the smartphone,
obtaining a position tracking data of the smartphone during the movement of the smartphone; and
texture mapping of the object of the 3D content by performing UV mapping of the object based on the orientation tracking data, the position tracking data, and the images, and further by generating a mesh model of the object based on the position tracking data and the depth map data.

10. A smartphone for use in a system according to any one of claims 1 to 8 or in a method according to claim 9.

11. A wireless marker for use in a system according to any one of claims 1 to 8 or in a method according to claim 9.

## Amended claims

### Amended claims in accordance with Rule 137(2) EPC.

1. A system for production of an object of a three-dimensional, 3D, content comprising:
A) a smartphone (100) comprising:
a camera for obtaining a plurality of images of the object of the 3D content during a movement of the smartphone (100),
a depth sensor for obtaining depth map data of the object of the 3D content during a movement of the smartphone (100), and
an orientation sensing unit for obtaining orientation tracking data of the smartphone (100) during a movement of the smartphone (100), and
B) a position tracking system for obtaining position tracking data of the smartphone (100) during the movement of the smartphone (100); and
C) a computing unit for texture mapping of the object of the 3D content and configured to perform UV mapping of the object based on the orientation tracking data, the position tracking data, and the images; and further configured to generate a mesh model of the object based on the position tracking data and the depth map data;
wherein the position tracking system comprises a plurality of wireless markers (200) and at least one wireless tag; and a position tracking module (102) comprised in the smartphone and a synchronization module (109) comprised in the smartphone,
wherein the at least one wireless tag (101) is comprised in the smartphone, or attached to and operatively coupled to the smartphone;
wherein the position tracking data is determined based on a time signal transmitted from the wireless markers to the at least one wireless tag (101);
wherein a local clock of each of the wireless markers (200) and the wireless tag (101) is synchronized to a clock of the smartphone; and
wherein the time signal is periodically transmitted from the wireless markers (200) or is transmitted from the wireless markers (200) in response to a request from the at least one wireless tag (101).

2. System according to claim 1,
wherein the position tracking data is determined based on distance measurements between the at least one wireless tag (101) and the respective wireless markers (200); and
wherein the distance measurements are based on a Time of Flight, ToF, and/or a Time difference of Arrival, TDoA, measurement of the time signals transmitted from the wireless markers (200).

3. System according to claim 1 or claim 2,
wherein the synchronization module (109) is configured to send synchronization requests (301a, 302a) to the respective wireless markers (200); and
wherein the synchronization module (109) is further configured to receive synchronization responses (301b, 302b) from the respective wireless markers (200).

4. System according to any one of claims 1 to 3,
wherein the at least one wireless tag (101) is an UWB tag; and
wherein the plurality of wireless markers (200) are UWB markers.

5. System according to any one of claims 1 to 4,
wherein the position tracking data is obtained at the smartphone (100); and
wherein the calculation of the position tracking is performed in the smartphone (100).

6. System according to any one of claims 1 to 5,
wherein the computing unit comprises an artificial intelligence for determining a second mesh model of the object based on the plurality of images;
wherein the computing unit is configured to correct and/or calibrate the mesh model based on the second mesh model.

7. System according to claim 6, wherein the computing unit is configured to perform texture mapping based on the UV mapping and the mesh model or the corrected and/or calibrated mesh model.

8. A method for production of an object of a three-dimensional, 3D, content, the method comprising the steps of
performing a movement of a smartphone (100) about the object of the 3D content, wherein the smartphone (100) comprises a camera for obtaining a plurality of images of the object of the 3D content during the movement of the smartphone, a depth sensor for obtaining depth map data of the object of the 3D content during a movement of the smartphone (100), and an orientation sensing unit for obtaining orientation tracking data of the smartphone during a movement of the smartphone (100),
obtaining a position tracking data of the smartphone (100) during the movement of the smartphone (100); and
texture mapping of the object of the 3D content by performing UV mapping of the object based on the orientation tracking data, the position tracking data, and the images, and further by generating a mesh model of the object based on the position tracking data and the depth map data.
wherein the obtaining the position tracking data is based on the use of a position tracking system comprising a plurality of wireless markers (200) and at least one wireless tag (101); and a position tracking module (102) comprised in the smartphone and a synchronization module (109) comprised in the smartphone,
wherein the at least one wireless tag (101) is comprised in the smartphone (100), or attached to and operatively coupled to the smartphone (100);
wherein the position tracking data is determined based on a time signal transmitted from the wireless markers (200) to the at least one wireless tag (101);
wherein a local clock of each of the wireless markers (200) and the wireless tag (101) is synchronized to a clock of the smartphone (100); and
wherein the time signal is periodically transmitted from the wireless markers (200) or is transmitted from the wireless markers in response to a request from the at least one wireless tag (101).

9. A smartphone (100) for production of an object of a three-dimensional, 3D, content
wherein the smartphone (100) is configured to:
obtaining, with a camera comprised therein, a plurality of images of the object of the 3D content during a movement of the smartphone (100),
obtaining, with a depth sensor comprised therein, a depth map data of the object of the 3D content during a movement of the smartphone (100), and
obtaining, with an orientation sensing unit comprised therein, orientation tracking data of the smartphone (100) during a movement of the smartphone (100),
wherein the smartphone (100) is configured such that a position thereof is tracked by a position tracking system for obtaining position tracking data of the smartphone (100) during the movement of the smartphone (100);
wherein the smartphone (100) is configured to communicate with a computing unit for texture mapping of the object of the 3D content; and wherein the computing unite is configured to perform UV mapping of the object based on the orientation tracking data, the position tracking data, and the images; and further configured to generate a mesh model of the object based on the position tracking data and the depth map data;
wherein the position tracking system comprises a plurality of wireless markers (200) and at least one wireless tag (101); and a position tracking module (102) comprised in the smartphone (100) and a synchronization module (109) comprised in the smartphone (100),
wherein the at least one wireless tag (101) is comprised in the smartphone (100), or attached to and operatively coupled to the smartphone (100);
wherein the position tracking data is determined based on a time signal transmitted from the wireless markers (200) to the at least one wireless tag (101);
wherein a local clock of each of the wireless markers (200) and the wireless tag (101) is synchronized to a clock of the smartphone (100); and
wherein the time signal is periodically transmitted from the wireless markers (200) or is transmitted from the wireless markers (200) in response to a request from the at least one wireless tag (101).

10. A wireless marker (101) for use in a system according to any one of claims 1 to 7 or in a method according to claim 8.
